# EUROPEAN PATENT APPLICATION

(11) **EP 4 700 622 A1**
(43) Date of publication of application: **25.02.2026**
(21) Application number: 25188301.3
(22) Date of filing: 09.07.2025
(51) Int. Cl.: G06F 21/55

(54) **ATTACK DETECTION METHOD FOR CONTAINER AND ELECTRONIC DEVICE**

(30) Priority: 21.08.2024 CN 202411155645
(71) Applicant: Beijing Volcano Engine Technology Co., Ltd., Beijing 100190 (CN)
(72) Inventor: ZHANG, Chen, 100028 Beijing (CN); GUO, Jianxin, 100028 Beijing (CN)
(74) Representative: Grünecker Patent- und Rechtsanwälte PartG mbB

(57) **Abstract**

An attack detection method for a container and an electronic device are provided. The attack detection of the combined analysis of the terminal and the network is realized, and the intrusion attack of the container is analyzed based on multiple dimensions to improve the detection rate and accuracy of the attack. The attack detection method includes: acquiring, from a network side, a network access request for a service of a first container load, and acquiring, from a device terminal where the first container is located, a process execution event in the first container; determining an abnormal access request in the network access request and an abnormal process event in the process execution event; and determining, based on the abnormal access request and the abnormal process event, an attack detection result.

## Description

### CROSS-REFERENCE TO RELATED APPLICATION(S)

This application claims the priority to and benefits of Chinese Patent Application, No. 202411155645.2, which was filed on August 21, 2024. The aforementioned patent application is hereby incorporated by reference in its entirety.

### TECHNICAL FIELD

The present disclosure relates to the field of computer technologies, and in particular, to an attack detection method for a container and an electronic device.

### BACKGROUND

With the rapid development of the Internet industry, network security problems have become increasingly prominent. For example, a WebRCE (Remote Code/Commond Execute) intrusion attack using a vulnerability of a Web application is a common intrusion attack means.

In the related art, a detection approach of WebRCE is usually to separately detect an access request on the network side or a process event of a system by using an attack detection tool, for example, to detect an access request for a service of a container load. However, the detection dimension is single, and there is a risk of false alarm.

### SUMMARY

In a first aspect, the present disclosure provides an attack detection method for a container, the attack detection method including:
acquiring, from a network side, a network access request for a service of a first container load, and acquiring, from a device terminal where the first container is located, a process execution event in the first container device terminal;
determining an abnormal access request in the network access request and an abnormal process event in the process execution event; and
determining, based on the abnormal access request and the abnormal process event, an attack detection result.

In a second aspect, the present disclosure provides an attack detection apparatus for a container, the attack detection apparatus including:
an acquisition module, configured to acquire a network access request for a service of a first container load from a network side, and acquire a process execution event in the first container from a device terminal where the first container is located;
a first determination module, configured to determine an abnormal access request in the network access request and an abnormal process event in the process execution event; and
a second determination module, configured to determine an attack detection result based on the abnormal access request and the abnormal process event.

In a third aspect, the present disclosure provides a computer-readable medium, on which a computer program is stored, where the program, when executed by a processing apparatus, implements the steps of the method according to any one of the above first aspect.

In a fourth aspect, the present disclosure provides an electronic device, including:
a storage apparatus, on which a computer program is stored;
a processing apparatus, configured to execute the computer program in the storage apparatus to implement the steps of the method according to any one of the above first aspect.

In a fifth aspect, the present disclosure provides a computer program product, including a computer program, where the computer program, when executed by a processor, implements the steps of the method according to any one of the above first aspect.

With the above technical solutions, the network access request for the service of the first container load is acquired from the network side, and the process execution event in the first container is acquired from the device terminal where the first container is located, and then the abnormal access request in the network access request and the abnormal process event in the process execution event are analyzed in combination to obtain the final attack detection result, thereby realizing the attack detection of the combined analysis of the terminal and the network. Moreover, the intrusion attack of the container is analyzed based on multiple dimensions to improve the detection rate and accuracy of the intrusion attack. In addition, it is also convenient for subsequently determining the attack source based on the abnormal access request and determining the attack impact scope based on the abnormal process event, thereby improving the efficiency of security analysis.

Other features and advantages of the present disclosure will be described in detail in the following detailed description section.

### BRIEF DESCRIPTION OF DRAWINGS

The above and other features, advantages, and aspects of the embodiments of the present disclosure will become more apparent when taken in conjunction with the drawings and with reference to the following detailed description. Throughout the drawings, the same or similar reference numerals refer to the same or similar elements. It should be understood that the drawings are schematic and that parts and elements are not necessarily drawn to scale. In the drawings:
Fig. 1 is a schematic flowchart of an attack detection method for a container according to an exemplary embodiment of the present disclosure;
Fig. 2 is a schematic flowchart of constructing an access request model according to an exemplary embodiment of the present disclosure;
Fig. 3 is a schematic diagram of a request address and a request feature list according to an exemplary embodiment of the present disclosure;
Fig. 4 is a schematic diagram of a process of determining an abnormal access request according to an exemplary embodiment of the present disclosure;
Fig. 5 is a schematic flowchart of constructing a process event model according to an exemplary embodiment of the present disclosure;
Fig. 6 is a schematic diagram of a process name, a parent process name, and a parameter feature list according to an exemplary embodiment of the present disclosure;
Fig. 7 is a schematic diagram of a process of determining an abnormal process event according to an exemplary embodiment of the present disclosure;
Fig. 8 is a schematic diagram of a process of correlation analysis according to an exemplary embodiment of the present disclosure;
Fig. 9 is a schematic diagram of temporal correlation according to an exemplary embodiment of the present disclosure;
Fig. 10 is a schematic diagram of abnormal mapping according to an exemplary embodiment of the present disclosure;
Fig. 11 is a schematic diagram of a process of an attack detection method for a container according to an exemplary embodiment of the present disclosure;
Fig. 12 is a block diagram of a structure of an attack detection apparatus for a container according to an exemplary embodiment of the present disclosure; and
Fig. 13 is a schematic diagram of a structure of an electronic device according to an exemplary embodiment of the present disclosure.

### DETAILED DESCRIPTION

The embodiments of the present disclosure will be described in more detail below with reference to the drawings. While certain embodiments of the present disclosure are shown in the drawings, it should be understood that the present disclosure may be embodied in various forms and should not be construed as limited to the embodiments set forth herein, and on the contrary, these embodiments are provided for a more thorough and complete understanding of the present disclosure. It should be understood that the drawings and embodiments of the present disclosure are only for illustrative purposes and are not intended to limit the scope of protection of the present disclosure.

It should be understood that the various steps recited in the method implementations of the present disclosure may be performed in a different order and/or in parallel. In addition, the method implementations may include additional steps and/or omit performing the illustrated steps. The scope of the present disclosure is not limited in this respect.

As used herein, the term "include/comprise" and variations thereof are open-ended inclusions, that is, "include/comprise but not limited to". The term "based on" is "based, at least in part, on". The term "an embodiment" means "at least one embodiment"; the term "another embodiment" means "at least one additional embodiment"; the term "some embodiments" means "at least some embodiments". Related definitions of other terms will be given in the description below.

It should be noted that the concepts such as "first" and "second" mentioned in the present disclosure are only used to distinguish different apparatuses, modules, or units, and are not used to limit the order or interdependence of the functions performed by these apparatuses, modules, or units.

It should be noted that the modifications of "one" and "a plurality of" mentioned in the present disclosure are illustrative and not restrictive, and those skilled in the art should understand that they should be understood as "one or more" unless the context clearly indicates otherwise.

The names of messages or information exchanged between a plurality of apparatuses in the implementations of the present disclosure are only used for illustrative purposes, and are not intended to limit the scope of these messages or information.

The WebRCE intrusion attack is an intrusion means of controlling a server, intruding or stealing data by issuing malicious code instructions through Web remote call by using exploiting vulnerabilities of Web application software.

In the related art, for a WebRCE intrusion, a WAF (Web Application Firewall) is usually used to perform abnormality detection on an access request on the network side, or an EDR (Endpoint Detection and Response) is used to perform attack detection on a process execution event on the terminal side. The core principle of both is to design corresponding detection rules by using known vulnerabilities or attack techniques, and perform regular matching detection on all access requests or process execution events with attack detection rules to detect abnormal access requests or abnormal process events. For example, an access request for a service of a container load is detected, where the container is a lightweight operating system-level virtualization technology of a kernel, which can form an isolated operating system space for running a specific service. Thus, the detection dimension of the above detection approach is single, and there is a risk of false alarm. Moreover, because the above detection approach performs attack detection based on detection rules designed by known vulnerabilities or attack techniques, it is very easy to be bypassed and there is a risk of high false negative rate, and there is almost no detection capability for vulnerability attacks that do not conform to the detection rules, such as 0-Day vulnerabilities.

In view of this, the present disclosure provides an attack detection method or a container, an apparatus, a readable medium, and an electronic device to solve the above technical problems.

The embodiments of the present disclosure will be further explained below with reference to the drawings.

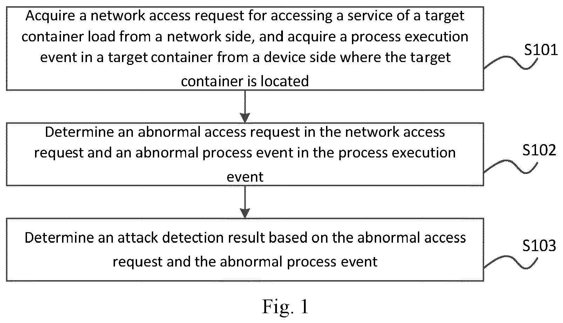

Fig. 1 is a flowchart of an attack detection method for a container according to an exemplary embodiment of the present disclosure. Referring to Fig. 1, the attack detection method includes the steps described below.

In S101, a network access request for a service of a first container load is acquired from a network side, and a process execution event in the first container is acquired from a device terminal where the first container is located.

Exemplarily, the device terminal is a terminal running an application, such as a server terminal such as a Linux server. Network traffic for an application of a container load running on the device terminal may be acquired from the network side, and then a network access request, such as an HTTP (Hypertext Transfer Protocol) access request, is parsed. The network access request may be acquired by a flow guiding technology of the WAF, and the process execution event occurring in the container at the device terminal is acquired by using a system event collection technology of the EDR, or other tools are used to acquire the network access request and the process execution event, which is not limited by the present disclosure.

In S102, an abnormal access request in the network access request and an abnormal process event in the process execution event are determined.

It should be understood that after the attack detection is enabled, the network access request and the process execution event are acquired in real time and continuously. There may be a normal access request or an abnormal access request in the network access request. Correspondingly, there may be a normal process event or an abnormal process event in the process execution event. The network access request and the process execution event need to be filtered to obtain the abnormal access request and the abnormal process event, so as to facilitate subsequent combined analysis of the abnormal access request and the abnormal process event.

In S103, an attack detection result is determined based on the abnormal access request and the abnormal process event.

With the above method, the network access request for the service of the first container load is acquired from the network side, and the process execution event in the first container is acquired from the device terminal where the first container is located, and then the abnormal access request in the network access request and the abnormal process event in the process execution event are analyzed in combination to obtain the final attack detection result, thereby realizing the attack detection of the combined analysis of the terminal and the network. Moreover, the intrusion attack of the container is analyzed based on multiple dimensions, and the detection rate and accuracy of the intrusion attack are improved. In addition, it is also convenient for subsequently determining the attack source based on the abnormal access request and determining the attack impact scope based on the abnormal process event, thereby improving the efficiency of security analysis.

The attack detection of the combined analysis of the terminal and the network refers to a technology of performing attack detection in combination with security protection mechanisms of a terminal side and a network side, including a security protection mechanism for intercepting and detecting network traffic of a container load on the network side and a security detection protection mechanism for a container load application running on a terminal device. As described above, the detection approach in the related art performs attack detection based on detection rules designed by known vulnerabilities or attack techniques, which is very easy to be bypassed and there is a risk of high false negative rate. Thus, the present disclosure performs abnormality detection by using the trained access request model and the trained process event model to improve the detection rate and accuracy of the WebRCE intrusion attack and reduce the attack risk of bypassing the vulnerability.

In a possible implementation, the determining the abnormal access request in the network access request and the abnormal process event in the process execution event may include: determining the abnormal access request in the network access request by an access request model, and determining the abnormal process event in the process execution event based on a process event model, where the access request model is obtained by modeling based on a normal access request for a service of the first container load, and the process event model is obtained by modeling based on a normal process event in the first container.

Exemplarily, the access request model is obtained by modeling a behavior baseline based on the normal access request for the service of the first container load acquired from the network side, and the process event model is obtained by modeling a behavior baseline based on the normal process event in the first container. Thus, the model deviation detection may be performed on the network access request or the process execution event based on the above-mentioned model to obtain the abnormal access request or the abnormal process event. Compared with the detection approach in the related art, the abnormality detection based on the model can improve the detection rate and accuracy of the WebRCE intrusion attack, reduce the attack risk of bypassing the vulnerability, and have good detection adaptability and robustness.

It should be noted that the attack detection method provided by the present disclosure may perform attack detection on the device terminal, or may perform attack detection on the container in the device terminal, which is not limited by the present disclosure.

Exemplarily, in the host load of the device terminal, multiple different application software services may be deployed at the same time, so the service on the host is complex and changeable. In the container load, because the container usually belongs to a microservice design, which focuses on providing one service, such as a mysql container, a tomcat container, a redis container, etc., that is, the service of the container is single and stable.

Thus, the attack detection method provided by the present disclosure is applied to the attack detection of the container. Compared with the complex host environment, the access request and the process event corresponding to the single and stable container are relatively simple, which is beneficial to better train the model and obtain the model with higher accuracy.

In a possible implementation, the access request model is determined by: acquiring a plurality of normal access requests for a service of a first container load; parsing, for each normal access request, the normal access request to obtain a normal request address and a normal request feature of the normal access request; performing cluster analysis on normal request features of the plurality of normal access requests according to the normal request addresses to obtain a request feature indicator corresponding to each normal request address; and determining the access request model based on all normal request addresses and the request feature indicators corresponding to the normal request addresses.

The request feature indicator includes at least one selected from the group consisting of: a request for body length, a request for proportion of letters, a request for proportion of numbers, a request for proportion of special characters, and combinations thereof.

Exemplarily, the request feature indicator may be one or more of a request for body length, a request for proportion of letters, a request for proportion of numbers, a request for proportion of special characters, or may be other feature indicators, which may be specifically set according to requirements, and the present disclosure does not limit this.

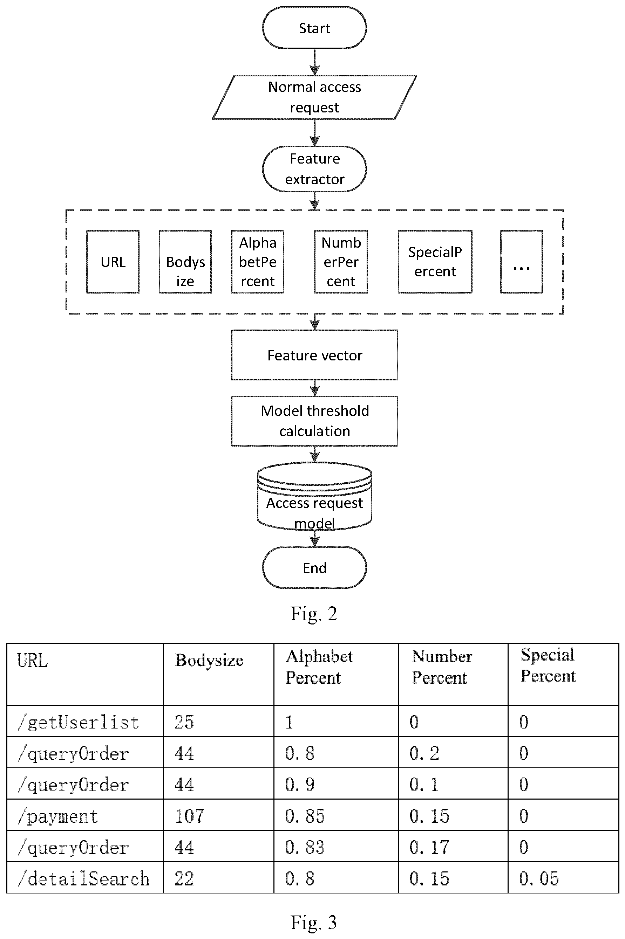

Exemplarily, in the model construction stage, the network access request may be acquired through the WAF tool, and the normal access request is filtered from the network access request to construct the model. As shown in Fig. 2, the feature extraction is performed on the normal access request based on the feature extractor to obtain the request feature and the request address of each normal access request, where the request address may be a URL (uniform resource locator). The feature extractor may be a neural network model that is pre-trained to extract features of the access request, which is not specifically limited by the present disclosure.

Exemplarily, taking the request address and the request feature list extracted by the feature extractor shown in Fig. 3 as an example, the request features of the same URL are subjected to cluster analysis to obtain the request feature indicator corresponding to each URL. The request feature indicator corresponding to each URL may be represented in a form of a feature vector {URL, bodysize, alphabetPercent, numberPercent, specialPercent}, where bodysize represents the length of the body in the request, alphabetPercent represents the proportion of letters in the request, numberPercent represents the proportion of numbers in the request, and specialPercent represents the proportion of special characters in the request.

Further, threshold calculation is performed on the feature vector of each URL, and the mean, standard deviation, variance, and the like of each feature dimension (body length, proportion of letters, proportion of numbers, proportion of special characters) may be calculated, which may be specifically set according to requirements, and the present disclosure does not limit this. Thus, the access request model of the single URL is obtained, and the access request models of all URLs are aggregated to obtain the final access request model.

It should be noted that the access request model obtained based on the above method can be used as a behavior baseline of the normal access request, which is convenient for subsequent abnormality detection of the network access request. Moreover, different access request models may be created for different request features of different containers, so that the detection rate and accuracy of the abnormal access request can be improved, the attack risk of bypassing the vulnerability can be reduced, and the detection adaptability and robustness are good.

In a possible implementation, the determining the abnormal access request in the network access request based on the access request model may include: parsing the network access request to obtain a network request address and a network request feature of the network access request; and for each target access request in the network access request, if a normal request address consistent with the network request address of the target access request doesn't exist in the access request model, determining the target access request as the abnormal access request, or if the normal request address consistent with the network request address of the target access request exists in the access request model and a feature value corresponding to at least one network request feature of the target access request exceeds a first indicator range, determining the target access request as the abnormal access request, where the first indicator range is determined based on the request feature indicator corresponding to the normal request address.

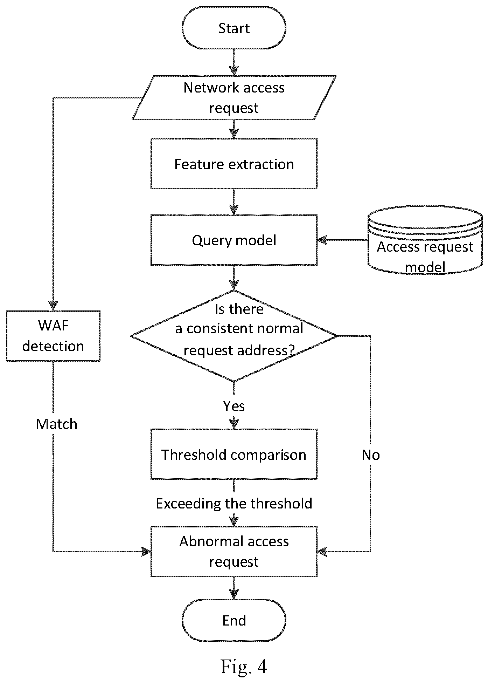

Exemplarily, the Web traffic on the network side is collected in real time to acquire the network access request for the service of the first container load. Referring to Fig. 4, the feature extraction is performed on the network access request to obtain the corresponding network request address and network request feature. Taking the URL corresponding to the target access request as "AAA" as an example, whether "AAA" exists in the access request model is queried. If the "AAA" doesn't exist in the access request model, it means that the target access request is the abnormal access request, and if "AAA" exists in the access request model, further analysis may be performed based on the request feature of the target access request and the request feature indicator corresponding to "AAA".

Exemplarily, the body length, the proportion of letters, the proportion of numbers, and the proportion of special characters of the target access request may be compared with their corresponding indicator ranges respectively, and if the feature value corresponding to at least one feature in the target access request is not within its corresponding indicator range, the target access request is determined as the abnormal access request.

It should be noted that the first indicator range is determined based on the request feature indicator corresponding to the normal request address, and the request feature indicators of different request addresses are different. During the comparison, if the request address of the target access request is "AAA", it is necessary to compare with the indicator range determined based on the request feature indicator corresponding to "AAA". When constructing the access request model, the mean, standard deviation, variance, and the like of each feature dimension of each request address are determined. Taking the request feature A of a certain URL as an example, the indicator range may be expressed as [Am-PV, Am+PV], [Am-N × Asd, Am+N × Asd], where Am is the mean of the request feature A, PV is the preset value, Asd is the standard deviation of the request feature A. N may be set according to requirements, and the like, which may be specifically set according to requirements, and the present disclosure does not limit this.

It should be noted that the abnormality detection may also be performed on the network access request in combination with the WAF tool, and if there is a match, the network access request is determined as the abnormal access request.

Thus, the abnormality detection may be performed on the network access request from multiple feature dimensions in real time. Based on the access request model, the detection rate and accuracy of the abnormal access request can be improved, the attack risk of bypassing the vulnerability can be reduced, and the detection adaptability and robustness are good.

In a possible implementation, the process event model is determined by: acquiring a plurality of normal process events in the first container; parsing, for each normal process event, the normal process event to obtain a normal combination feature and a normal parameter feature of the normal process event, where the normal combination feature includes a process name and a parent process name of the normal process event; performing cluster analysis on normal parameter features of the plurality of normal process events according to the normal combination features to obtain a parameter feature indicator corresponding to each normal combination feature; and determining the process event model based on all normal combination features and the parameter feature indicators corresponding to the normal combination features.

The parameter feature indicator may include a process parameter length. The process parameter length represents the length of the parameter character string in the process command line, or may be other feature indicators, which may be specifically set according to requirements, and the present disclosure does not limit this.

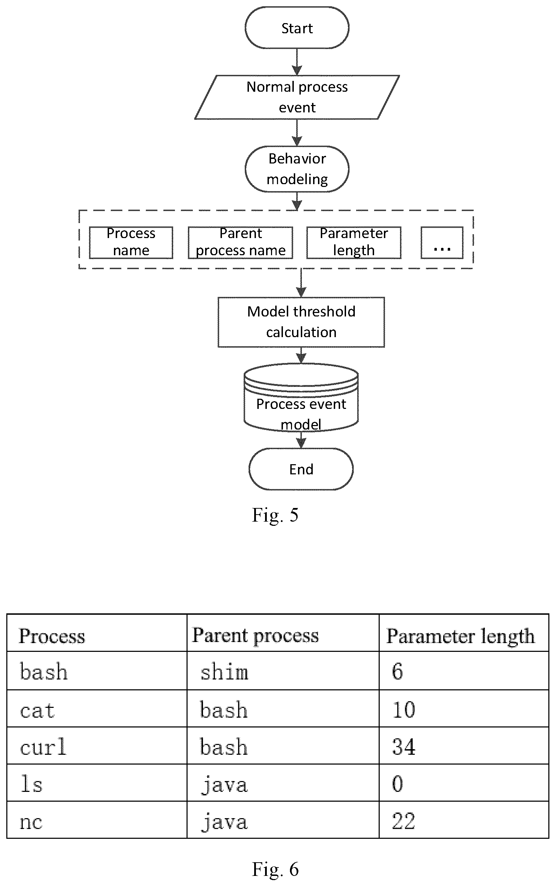

Exemplarily, in the model construction stage, the process execution event in the first container at the device terminal may be acquired through the EDR tool, and the normal process event is filtered from the process execution event to construct the model. As shown in Fig. 5, the normal process event is parsed, and the behavior of the process event is modeled to obtain the combination feature and the parameter feature of each normal process event. Certainly, the feature extraction may also be performed on the normal process event by using a neural network model that is pre-trained to extract features of the process event, which is not specifically limited by the present disclosure.

Exemplarily, taking the process name, the parent process name, and the parameter feature list shown in Fig. 6 as an example, the parameter features of the same "process name+parent process name" combination are subjected to cluster analysis to obtain the parameter feature indicator corresponding to each "process name+parent process name" combination. Certainly, the parameter feature indicator corresponding to each "process name+parent process name" combination may also be represented in a form of a feature vector {processName, parentprocessName, parameterPercent}, where processName represents the process name, parentprocessName represents the parent process name, and parameterPercent represents the process parameter length.

Further, the threshold calculation is performed on the parameter feature of each process combination, for example, calculating the mean, standard deviation, variance, and the like of each process parameter length, which may be specifically set according to requirements, and the present disclosure does not limit this. Thus, the process event model corresponding to the single "process name+parent process name" combination is obtained, and the process event models corresponding to all "process name+parent process name" combinations are aggregated to obtain the final process event model.

It should be noted that the process event model obtained based on the above method can be used as a behavior baseline of the normal process event, which is convenient for subsequent abnormality detection of the process execution event. Moreover, different process event models may be created for different process features of different containers, so that the detection rate and accuracy of the abnormal process event can be improved, the attack risk of bypassing the vulnerability can be reduced, and the detection adaptability and robustness are good.

In a possible implementation, the determining the abnormal process event in the process execution event based on the process event model may include: parsing the process execution event to obtain a process combination feature and a process parameter feature of the process execution event; and for each target process event in the process execution event, if the normal combination feature consistent with the process combination feature of the target process event doesn't' exist in the process event model, determining the target process event as the abnormal process event, or if the normal combination feature consistent with the process combination feature of the target process event exist in the process event model and a feature value corresponding to the process parameter feature of the target process event exceeds a second indicator range, determining the target process event as the abnormal process event, where the second indicator range is determined based on the parameter feature indicator corresponding to the normal combination feature.

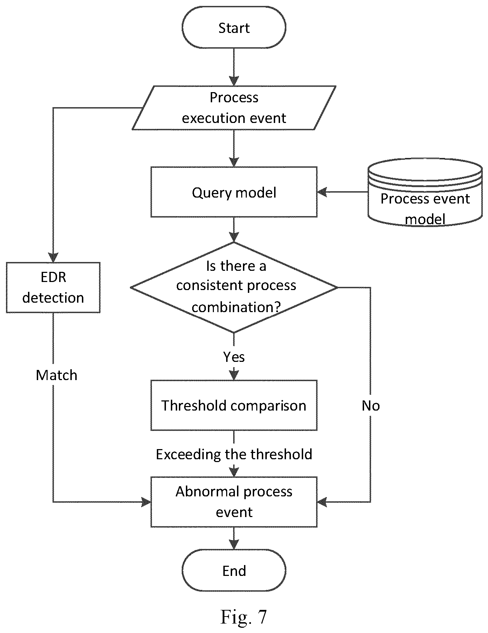

Exemplarily, the process execution event in the first container at the device terminal is collected in real time, and referring to Fig. 7, the process execution event is parsed to obtain the corresponding process combination feature and process parameter feature. Taking the process name corresponding to the target process event as "A" and the parent process name as "B" as an example, whether the process combination of "A+B" exists in the process event model is queried. If the process combination of "A+B" doesn't exist in the process event model, it means that the target process event is the abnormal process event; if the process combination of "A+B" exists in the process event model, further analysis may be performed based on the parameter feature of the target process event and the parameter feature indicator corresponding to the process combination of "A+B".

Exemplarily, taking the parameter feature as the parameter length as an example, the process parameter length of the target process event may be compared with a indicator range of the parameter length, and if the feature value corresponding to the process parameter length of the target process event is not within its corresponding indicator range of the parameter length , the target process event is determined as the abnormal process event.

It should be noted that the second indicator range is determined based on the parameter feature indicator corresponding to the normal combination feature, and the parameter feature indicators of different combination features are different. During comparison, if the combination feature of the target process event is "A+B", it is necessary to compare with the indicator range determined based on the parameter feature indicator corresponding to "A+B". When constructing the process event model, the mean, standard deviation, variance, and the like of the process parameter length of each process combination are determined. Taking the process parameter feature S of a certain process combination as an example, the indicator range may be expressed as [Sm-PV, Sm+PV], [Sm-N × Ssd,Sm+N × Ssd], where Sm is the mean of the process parameter feature S, PV is the preset value, Ssd is the standard deviation of the process parameter feature S. N may be set according to requirements, and the like, which may be specifically set according to requirements, and the present disclosure does not limit this.

It should be noted that the abnormality detection may also be performed on the process execution event in combination with the EDR tool, and if there is a match, the process execution event is determined as the abnormal process event.

Thus, the abnormality detection may be performed on the process execution event in real time. Based on the process event model, the detection rate and accuracy of the process execution event can be improved, the attack risk of bypassing the vulnerability can be reduced, and the detection adaptability and robustness are good.

After the abnormal access request and the abnormal process event are obtained, the abnormal access request and the abnormal process event may be analyzed in combination to obtain the attack detection result, thereby realizing the attack detection of the combined analysis of the terminal and the network.

In a possible implementation, the determining the attack detection result based on the abnormal access request and the abnormal process event may include: performing temporal correlation analysis on the abnormal access request and the abnormal process event to obtain a temporal correlation sequence; determining a target abnormal sequence in the temporal correlation sequence based on the temporal correlation sequence and a preset abnormal condition; and determining the attack detection result based on a target abnormal access request and a target abnormal process event corresponding to the target abnormal sequence, where the attack detection result includes a mapping relationship between the target abnormal access request and the target abnormal process event.

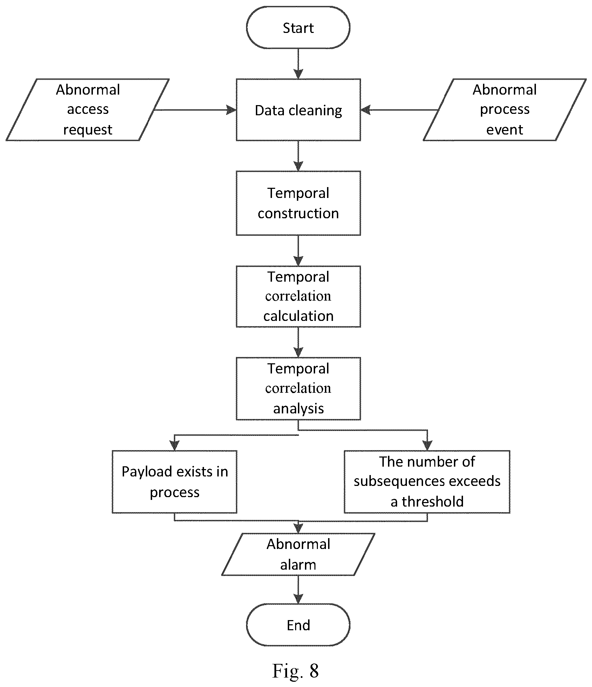

Exemplarily, referring to Fig. 8, the abnormal access request and the abnormal process event are aggregated. It should be noted that in an actual application scenario, the access request with a non-200 Code (status code) in the abnormal access request may be eliminated, and only the access request with a Code 200 is retained. Code 200 represents a successful response to the request, that is, there is no need to analyze the abnormal access request that is not successfully responded, thereby reducing resource waste.

Then, the temporal sequences of the abnormal access request and the abnormal process event are constructed separately for temporal correlation analysis. In a possible implementation, the performing the temporal correlation analysis on the abnormal access request and the abnormal process event to obtain the temporal correlation sequence may include: for each abnormal access request, determining a target time of the abnormal access request, taking a number of abnormal access requests within a first preset time period after the target time as a number of target abnormal requests corresponding to the target time, and taking a number of abnormal process events within a second preset time period after the target time as a number of target abnormal processes corresponding to the target time, where the second preset time period is greater than the first preset time period; determining an abnormal request sequence according to the numbers of target abnormal requests corresponding to all target times, and determining an abnormal process sequence according to the numbers of target abnormal processes corresponding to all target times; and determining subsequences in the abnormal request sequence and the abnormal process sequence that are positively correlated as the temporal correlation sequence.

Exemplarily, still referring to Fig. 8, still taking the WebRCE intrusion attack scenario as an example, the WebRCE intrusion attack is generally to implant a shell execution command in an HTTP request, and at the same time, one HTTP request may trigger the execution of multiple commands, so the network access request and the process execution event are in a one-to-many relationship. The time window statistics may be performed on the abnormal access request and the abnormal process event separately according to the time sequence.

Exemplarily, taking the occurrence time T of the abnormal access request as a starting point, the number P of occurrences of the abnormal access request in the statistical time window of T+x seconds is counted, where x represents the first preset time period, which may be 10 seconds, 15 seconds, etc., and the present disclosure does not limit this. Because the process execution event will lag behind the network access request, the statistical time window of the process execution event may be increased by a certain spill time, such as 5 seconds, 10 seconds, etc., compared with the network access request, that is, the second preset time period is greater than the first preset time period, so as to include as many process execution events triggered by the network access request as possible; for example, taking the time T as a reference, and the number Q of process execution events in the time window of T+(x+10) seconds is counted. The abnormal request sequence and the abnormal process sequence in the time sequence may be constructed by continuously counting the real-time abnormal access request and the abnormal process event.

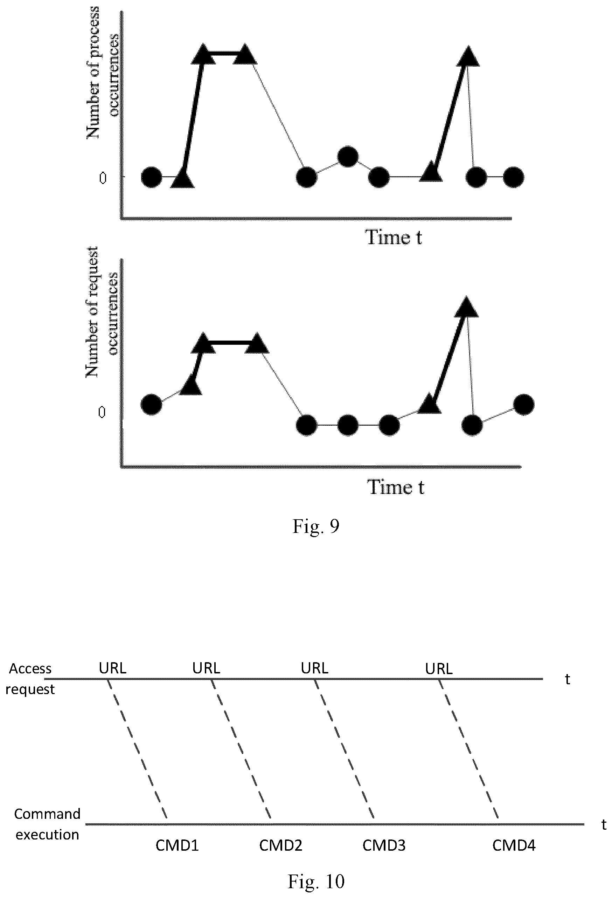

Further, the temporal correlation analysis is performed on the above abnormal request sequence and the abnormal process sequence, for example, the temporal correlation calculation may be performed by a DTW algorithm (Dynamic Time Warping), that is, the similarity between the two time sequences is calculated by using dynamic programming, so as to obtain the time sequence associated with P and Q. Certainly, other algorithms may also be used for temporal correlation analysis, which is not limited by the present disclosure. As shown in Fig. 9, the subsequence marked as a thick line is the temporal correlation sequence, indicating that when the abnormal access request occurs, the abnormal process sequence also occurs, and there is a positive correlation between them.

Continuing to refer to Fig. 8, after the temporal correlation sequence is obtained, the temporal correlation sequence may be further analyzed to determine whether it is an abnormal sequence. In a possible implementation, the determining the target abnormal sequence in the temporal correlation sequence based on the temporal correlation sequence and the preset abnormal condition may include: if an abnormal subsequence exists in the temporal correlation sequence, determining the abnormal subsequence as the target abnormal sequence in the temporal correlation sequence, where an abnormal access request corresponding to the abnormal subsequence includes a process name of an abnormal process event corresponding to the abnormal subsequence, and the abnormal process event corresponding to the abnormal subsequence is successfully executed; and/or if the number of subsequences in the temporal correlation sequence within a third preset time period is greater than a preset number threshold, determining the temporal correlation sequence as the target abnormal sequence, where the third preset time period is greater than the second preset time period.

Exemplarily, still taking the WebRCE intrusion attack as an example, taking the subsequence of the abnormal access request X corresponding to the abnormal process event Y in the temporal correlation sequence as an example, if the process name of the abnormal process event Y exists in the body or header of the abnormal access request X, it means that the abnormal access request X contains a payload of the shell command, and the abnormal process event Y has been successfully executed remotely in the device terminal to be detected, then it may be determined that the subsequence is the target abnormal sequence, that is, there is a WebRCE intrusion attack. In addition, if the number of associated subsequences is greater than the preset number threshold within the third preset time period, the temporal correlation sequence may also be determined as the target abnormal sequence.

Then, still taking the WebRCE intrusion attack as an example, the target abnormal access request and the corresponding target abnormal process event in the target abnormal sequence are mapped to obtain the abnormal mapping of the terminal and network behavior of the WebRCE intrusion attack as shown in Fig. 10, where the CMD (command) execution will trigger the corresponding process execution event. Then, the corresponding WebRCE intrusion attack alarm is triggered to realize the detection of the WebRCE intrusion attack of the real-time traffic.

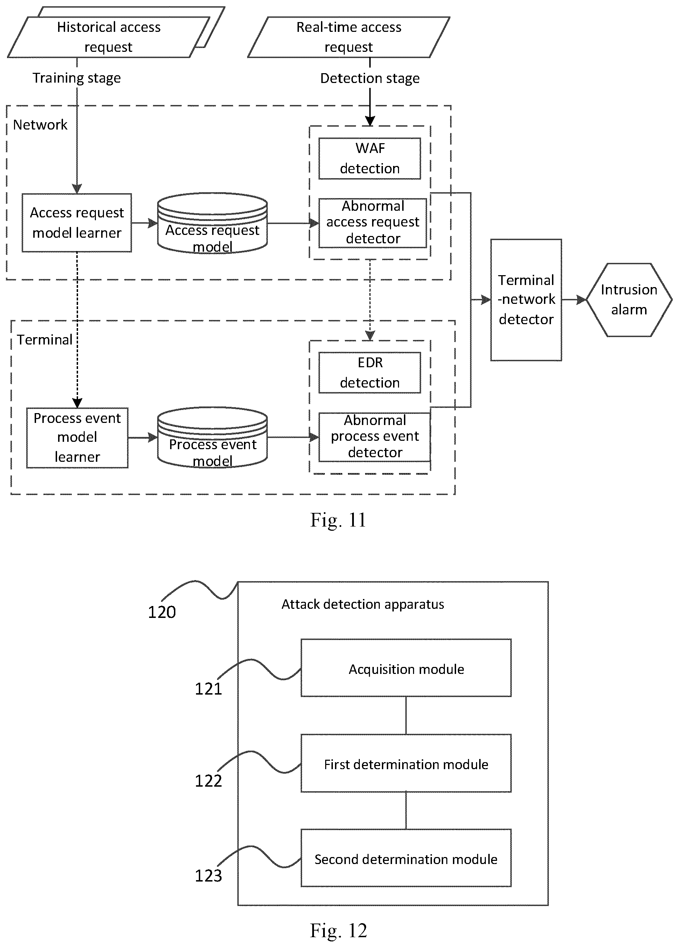

The overall process of the attack detection method for the container provided by the present disclosure will be described below with reference to Fig. 11.

Referring to Fig. 11, in the training stage, the access request model learner may be used to perform model training on the historical access request of the container, so as to learn and obtain the access request model of the container on the network side. For the specific learning process, reference may be made to Fig. 2 and the related embodiments, which will not be repeated in the present disclosure. On the other side, the process event model learner is used to perform model training on the historical process event triggered in the container in response to the historical access request, so as to learn and obtain the process event model of the container at the device terminal. For the specific learning process, reference may be made to Fig. 5 and the related embodiments, which will not be repeated in the present disclosure.

Further, in the real-time detection stage, the abnormality detection is first performed on the network side and the terminal side.

On the network side, the abnormal access request detector is used to perform access request anomaly detection on the acquired real-time network access request based on the access request model, so as to determine whether an abnormal access request exists or not. For the specific determination process, reference may be made to Fig. 4 and the related embodiments, which will not be repeated in the present disclosure. At the same time, the WAF detector is also used to determine whether the access request is an abnormal access request.

On the device terminal side, the abnormal process event detector is used to perform process event abnormality detection on the acquired real-time process execution event based on the process event model, so as to determine whether an abnormal process event exists or not. For the specific determination process, reference may be made to Fig. 7 and the related embodiments, which will not be repeated in the present disclosure. At the same time, the EDR detector is also used to determine whether the process event is an abnormal process event.

Then, the terminal-network detector is used to perform correlation analysis on the abnormal access request on the network side and the abnormal process event on the device terminal side in the time sequence, find the associated abnormal sequence, and determine whether a WebRCE intrusion attack exists or not. For the specific determination process, reference may be made to Fig. 8 and the related embodiments, which will not be repeated in the present disclosure. In the case where it is determined that the WebRCE intrusion attack exists, an intrusion attack alarm is generated.

With the above method, based on the characteristics of the singularity and stability of the service of the container load, the behavior of the terminal and the network is combined to determine whether there is a WebRCE intrusion attack. Firstly, the network access request for the service of the container load is acquired by using the flow guiding technology of the WAF, and the network access request of the single container is modeled, and the process execution event occurring in the container is acquired by using the system event collection technology of the EDR and modeled. After the model is constructed, the real-time WebRCE attack detection may be performed on the container, and the network access request and the process execution event collected by the network and the terminal are matched with the model separately to analyze the abnormal access request and the abnormal process event deviating from the model. Finally, the characteristics of the WebRCE intrusion attack are used, that is, the payload carried in the network access request is used to drive the payload to execute system commands in the container to achieve the effect of the intrusion attack. In this way, the time window correlation and analysis are performed on the abnormal access request and the abnormal process event in the time sequence to find the sequence with the WebRCE intrusion attack, and finally, the attack detection of the WebRCE is realized.

With the above method, the attack detection of the combined analysis of the terminal and the network is realized by performing the correlation analysis on the abnormal process event and the abnormal access request, which can not only improve the detection rate and accuracy of the WebRCE intrusion attack, reduce the attack risk of bypassing the vulnerability, but also be applicable to the attack detection of WebRCE vulnerabilities such as 0-day, and have good detection adaptability and robustness. In addition, it is also convenient for subsequently determining the attack source based on the abnormal access request and determining the attack impact scope based on the abnormal process event, thereby improving the efficiency of traceability analysis.

Based on the same concept, the embodiments of the present disclosure further provide an attack detection apparatus for a container. Referring to Fig. 12, the attack detection apparatus 120 includes:
an acquisition module 121, configured to acquire a network access request for a service of a first container load from a network side, and acquire a process execution event in the first container from a device terminal where the first container is located;
a first determination module 122, configured to determine an abnormal access request in the network access request and an abnormal process event in the process execution event; and
a second determination module 123, configured to determine an attack detection result based on the abnormal access request and the abnormal process event.

With the above apparatus, the network access request for the service of the first container load is acquired from the network side, and the process execution event in the first container is acquired from the device terminal where the first container is located, and then the abnormal access request in the network access request and the abnormal process event in the process execution event are analyzed in combination to obtain the final attack detection result, thereby realizing the attack detection of the combined analysis of the terminal and the network. Moreover, the intrusion attack of the container is analyzed based on multiple dimensions to improve the detection rate and accuracy of the intrusion attack. In addition, it is also convenient for subsequently determining the attack source based on the abnormal access request and determining the attack impact scope based on the abnormal process event, thereby improving the efficiency of security analysis.

Optionally, the first determination module 122 is configured to:
determine the abnormal access request in the network access request by an access request model, and determine the abnormal process event in the process execution event based on a process event model;
where the access request model is obtained by modeling based on a normal access request for a service of the first container load, and the process event model is obtained by modeling based on a normal process event in the first container.

Optionally, the access request model is determined by a first training module, and the first training module includes:
a first acquisition sub-module, configured to acquire a plurality of the normal access requests for the service of the first container load;
a first parsing sub-module, configured to parse, for each normal access request, the normal access request to obtain a normal request address and a normal request feature of the normal access request;
a first analysis sub-module, configured to perform cluster analysis on normal request features of the plurality of normal access requests according to the normal request addresses to obtain a request feature indicator corresponding to each normal request address; and
a first determination sub-module, configured to determine the access request model based on all normal request addresses and the request feature indicators corresponding to the normal request addresses.

Optionally, the first determination module 122 is configured to:
parse the network access request to obtain a network request address and a network request feature of the network access request; and
for each target access request in the network access request, if there is no normal request address consistent with the network request address of the target access request in the access request model, determine the target access request as the abnormal access request, or if there is the normal request address consistent with the network request address of the target access request in the access request model and a feature value corresponding to at least one network request feature of the target access request exceeds a first indicator range, determine the target access request as the abnormal access request, where the first indicator range is determined based on the request feature indicator corresponding to the normal request address.

Optionally, the request feature indicator includes at least one of: a request body length, a proportion of request letters, a proportion of request numbers, and a proportion of request special characters.

Optionally, the process event model is determined by a second training module, and the second training module includes:
a second acquisition sub-module, configured to acquire a plurality of the normal process events in the first container;
a second parsing sub-module, configured to parse, for each normal process event, the normal process event to obtain a normal combination feature and a normal parameter feature of the normal process event, where the normal combination feature includes a process name and a parent process name of the normal process event;
a second analysis sub-module, configured to perform cluster analysis on normal parameter features of the plurality of normal process events according to the normal combination features to obtain a parameter feature indicator corresponding to each normal combination feature; and
a second determination sub-module, configured to determine the process event model based on all normal combination features and the parameter feature indicators corresponding to the normal combination features.

Optionally, the first determination module 122 is configured to:
parse the process execution event to obtain a process combination feature and a process parameter feature of the process execution event; and
for each target process event in the process execution event, if there is no normal combination feature consistent with the process combination feature of the target process event in the process event model, determine the target process event as the abnormal process event, or if there is the normal combination feature consistent with the process combination feature of the target process event in the process event model and a feature value corresponding to the process parameter feature of the target process event exceeds a second indicator range, determine the target process event as the abnormal process event, where the second indicator range is determined based on the parameter feature indicator corresponding to the normal combination feature.

Optionally, the parameter feature indicator includes a process parameter length.

Optionally, the second determination module 123 includes:
a correlation module, configured to perform temporal correlation analysis on the abnormal access request and the abnormal process event to obtain a temporal correlation sequence;
an abnormal sequence determination module, configured to determine a target abnormal sequence in the temporal correlation sequence based on the temporal correlation sequence and a preset abnormal condition; and
a result determination module, configured to determine the attack detection result based on a target abnormal access request and a target abnormal process event corresponding to the target abnormal sequence, where the attack detection result includes a mapping relationship between the target abnormal access request and the target abnormal process event.

Optionally, the correlation module is configured to:
for each abnormal access request, determine a target time of the abnormal access request, take a number of abnormal access requests within a first preset time period after the target time as a number of target abnormal requests corresponding to the target time, and take a number of abnormal process events within a second preset time period after the target time as a number of target abnormal processes corresponding to the target time, where the second preset time period is greater than the first preset time period;
determine an abnormal request sequence according to numbers of target abnormal requests corresponding to all target times, and determine an abnormal process sequence according to numbers of target abnormal processes corresponding to all target times; and
determine subsequences in the abnormal request sequence and the abnormal process sequence that are positively correlated as the temporal correlation sequence.

Optionally, the correlation module is configured to:
if there is an abnormal subsequence in the temporal correlation sequence, determine the abnormal subsequence as the target abnormal sequence in the temporal correlation sequence, where an abnormal access request corresponding to the abnormal subsequence includes a process name of an abnormal process event corresponding to the abnormal subsequence, and the abnormal process event corresponding to the abnormal subsequence is successfully executed; and/or
if the number of subsequences in the temporal correlation sequence within a third preset time period is greater than a preset number threshold, determine the temporal correlation sequence as the target abnormal sequence, where the third preset time period is greater than the second preset time period.

Regarding the apparatus in the above embodiment, the specific manner in which each module performs an operation has been described in detail in the embodiments related to the method, and will not be described in detail here.

Based on the same concept, the embodiments of the present disclosure further provide a computer-readable medium, on which a computer program is stored, where the program, when executed by a processing apparatus, implements the steps of the above attack detection method for the container.

Based on the same concept, the embodiments of the present disclosure further provide an electronic device, which may include:
a storage apparatus, on which a computer program is stored;
a processing apparatus, configured to execute the computer program in the storage apparatus to implement the steps of the above attack detection method for the container.

Based on the same concept, the embodiments of the present disclosure further provide a computer program product, including a computer program, where the computer program, when executed by a processor, implements the steps of the above attack detection method for the container.

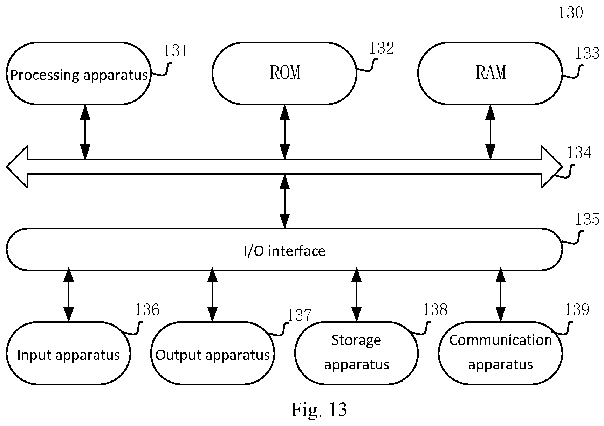

Reference is made to Fig. 13 below, which illustrates a schematic diagram of a structure of an electronic device 130 suitable for implementing the embodiments of the present disclosure. The device terminal to be detected in the embodiments of the present disclosure may include, but is not limited to, a mobile terminal such as a mobile phone, a notebook computer, a PDA (Personal Digital Assistant), a PAD (tablet computer), a PMP (Portable Multimedia Player), and an in-vehicle terminal (such as an in-vehicle navigation terminal), and a stationary terminal such as a digital TV and a desktop computer, or may be a server end. The electronic device shown in Fig. 13 is only an example, and should not impose any limitation to the function and scope of use of the embodiments of the present disclosure.

As shown in Fig. 13, the electronic device 130 may include a processing apparatus (such as a central processing unit, a graphics processing unit, etc.) 131, which may perform various appropriate actions and processing according to a program stored in a read-only memory (ROM) 132 or a program loaded from a storage apparatus 138 into a random access memory (RAM) 133. The RAM 133 further stores various programs and data required for the operation of the electronic device 130. The processing apparatus 131, the ROM 132, and the RAM 133 are connected to each other through a bus 134. An input/output (I/O) interface 135 is also connected to the bus 134.

Generally, the following apparatuses may be connected to the I/O interface 135: an input apparatus 136 including, for example, a touchscreen, a touchpad, a keyboard, a mouse, a camera, a microphone, an accelerometer, a gyroscope, etc.; an output apparatus 137 including, for example, a liquid crystal display (LCD), a speaker, a vibrator, etc.; a storage apparatus 138 including, for example, a magnetic tape, a hard disk, etc.; and a communication apparatus 139. The communication apparatus 139 may allow the electronic device 130 to communicate with other devices in a wireless or wired manner to exchange data. Although Fig. 13 shows the electronic device 130 having various apparatuses, it should be understood that it is not required to implement or have all of the illustrated apparatuses. Alternatively, more or fewer apparatuses may be implemented or provided.

In particular, according to the embodiments of the present disclosure, the processes described above with reference to the flowcharts may be implemented as a computer software program. For example, the embodiments of the present disclosure include a computer program product, which includes a computer program carried on a non-transitory computer-readable medium, where the computer program includes program codes for executing the method shown in the flowcharts. In such embodiments, the computer program may be downloaded and installed from the network through the communication apparatus 139, or installed from the storage apparatus 138, or installed from the ROM 132. When the computer program is executed by the processing apparatus 131, the above functions defined in the method of the embodiments of the present disclosure are executed.

It should be noted that the above computer-readable medium in the present disclosure may be a computer-readable signal medium or a computer-readable storage medium or any combination thereof. The computer-readable storage medium may be, for example, but not limited to, an electrical, magnetic, optical, electromagnetic, infrared, or semiconductor system, apparatus, or device, or any combination thereof. More specific examples of the computer-readable storage medium may include, but are not limited to: an electrical connection with one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present disclosure, the computer-readable storage medium may be any tangible medium that contains or stores a program that may be used by or in combination with an instruction execution system, apparatus, or device. In the present disclosure, the computer-readable signal medium may include a data signal propagated in a baseband or as a part of a carrier wave, and computer-readable program codes are carried in the data signal. The data signal propagated in this manner may be in various forms, including but not limited to an electromagnetic signal, an optical signal, or any suitable combination thereof. The computer-readable signal medium may also be any computer-readable medium other than the computer-readable storage medium. The computer-readable signal medium may send, propagate, or transmit a program used by or in combination with an instruction execution system, apparatus, or device. The program codes contained on the computer-readable medium may be transmitted by any suitable medium, including but not limited to: a wire, an optical cable, RF (radio frequency), etc., or any suitable combination thereof.

In some implementations, communication may be performed by using any currently known or future developed network protocol such as HyperText Transfer Protocol (HTTP), and may be interconnected with digital data communication (for example, a communication network) in any form or medium. Examples of the communication network include a local area network ("LAN"), a wide area network ("WAN"), an internet (for example, the Internet), and a peer-to-peer network (for example, an ad hoc network), as well as any currently known or future developed network.

The above computer-readable medium may be included in the above electronic device, or may exist alone without being assembled into the electronic device.

The above computer-readable medium carries one or more programs, and when the above one or more programs are executed by the electronic device, the electronic device is caused to: acquire a network access request for a service of a first container load from a network side, and acquire a process execution event in the first container from a device terminal where the first container is located; determine an abnormal access request in the network access request and an abnormal process event in the process execution event; and determine an attack detection result based on the abnormal access request and the abnormal process event.

The computer program codes for executing the operations of the present disclosure may be written in one or more programming languages or a combination thereof. The above programming languages include, but are not limited to, object-oriented programming languages such as Java, Smalltalk, and C++, and also include conventional procedural programming languages such as "C" language or similar programming languages. The program codes may be executed entirely on a user's computer, partly on a user's computer, as a stand-alone software package, partly on a user's computer and partly on a remote computer, or entirely on a remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the drawings illustrate the architecture, functionality, and operation of possible implementations of systems, methods, and computer program products according to various embodiments of the present disclosure. In this regard, each block in the flowcharts or block diagrams may represent a module, a program segment, or a portion of code, including one or more executable instructions for implementing specified logical functions. It should also be noted that, in some alternative implementations, the functions noted in the blocks may also occur out of the order noted in the drawings. For example, two blocks shown in succession may, in fact, can be executed substantially concurrently, or the blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules involved in the embodiments described in the present disclosure may be implemented in software or hardware. Wherein, the name of the module does not constitute a limitation to the module itself under certain circumstances.

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, a machine-readable medium may be a tangible medium that may include or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof.

The above description is only preferred embodiments of the present disclosure and an illustration of the applied technical principles. Those skilled in the art should understand that the scope of disclosure involved in the present disclosure is not limited to the technical solutions formed by the specific combination of the above technical features, and should also cover other technical solutions formed by any combination of the above technical features or equivalent features thereof without departing from the above disclosed concept. For example, the technical solutions formed by replacing the above features with the technical features with similar functions disclosed in the present disclosure (but not limited to).

In addition, although operations are depicted in a particular order, it should not be understood that these operations are required to be performed in the specific order shown or in a sequential order. Under certain circumstances, multitasking and parallel processing may be advantageous. Similarly, although the above discussion contains several specific implementation details, these should not be construed as limiting the scope of the present disclosure. Certain features that are described in the context of separate embodiments may also be implemented in combination in a single embodiment. On the contrary, various features described in the context of a single embodiment may also be implemented in multiple embodiments individually or in any suitable sub-combination.

Although the subject matter has been described in language specific to structural features and/or logical actions of the methods, it should be understood that the subject matter defined in the appended claims is not necessarily limited to the specific features or actions described above. On the contrary, the specific features and actions described above are only exemplary forms of implementing the claims. Regarding the apparatus in the above embodiment, the specific manner in which each module performs an operation has been described in detail in the embodiments related to the method, and will not be described in detail here.

## Claims

1. An attack detection method for a container, comprising:
acquiring, from a network side, a network access request for a service of a first container load, and acquiring, from a device terminal where the first container is located, a process execution event in the first container (S101);
determining an abnormal access request in the network access request and an abnormal process event in the process execution event (S102); and
determining, based on the abnormal access request and the abnormal process event, an attack detection result (S103).

2. The attack detection method for the container according to claim 1, wherein the determining the abnormal access request in the network access request and the abnormal process event in the process execution event (S101) comprises:
determining, by an access request model, the abnormal access request in the network access request and determining, by a process event model, the abnormal process event in the process execution event;
wherein the access request model is obtained by modeling based on a normal access request for the service of the first container load, and the process event model is obtained by modeling based on a normal process event in the first container.

3. The attack detection method for the container according to claim 2, wherein the access request model is determined by:
acquiring a plurality of the normal access requests for the service of the first container load;
parsing, for each normal access request, the normal access request to obtain a normal request address and a normal request feature of the normal access request;
performing, according to the normal request addresses, cluster analysis on normal request features of the plurality of normal access requests to obtain a request feature indicator corresponding to each normal request address; and
determining the access request model based on all normal request addresses and the request feature indicators corresponding to the normal request addresses.

4. The attack detection method for the container according to claim 3, wherein the determining, by the access request model, the abnormal access request in the network access request comprises:
parsing the network access request to obtain a network request address and a network request feature of the network access request; and
for each target access request in the network access request, determining, in response to that a normal request address consistent with the network request address of the target access request doesn't exist in the access request model, the target access request as the abnormal access request, or determining, in response to that the normal request address consistent with the network request address of the target access request exists in the access request model and a feature value corresponding to at least one network request feature of the target access request exceeds a first indicator range, the target access request as the abnormal access request, wherein the first indicator range is determined based on the request feature indicator corresponding to the normal request address.

5. The attack detection method for the container according to claim 3 or 4, wherein the request feature indicator comprises at least one selected from a group consisting of: a request for body length, a request for a proportion of letters, a request for a proportion of numbers, a request for a proportion of special characters, and combinations thereof.

6. The attack detection method for the container according to any one of claims 2 to 5, wherein the process event model is determined by:
acquiring a plurality of the normal process events in the first container;
parsing, for each normal process event, the normal process event to obtain a normal combination feature and a normal parameter feature of the normal process event, wherein the normal combination feature comprises a process name and a parent process name of the normal process event;
performing, according to the normal combination features, cluster analysis on normal parameter features of the plurality of normal process events to obtain a parameter feature indicator corresponding to each normal combination feature; and
determining, based on all normal combination features and the parameter feature indicators corresponding to the normal combination features, the process event model.

7. The attack detection method for the container according to claim 6, wherein the determining, by the process event model, the abnormal process event in the process execution event comprises:
parsing the process execution event to obtain a process combination feature and a process parameter feature of the process execution event; and
for each target process event in the process execution event, determining, in response to that a normal combination feature consistent with the process combination feature of the target process event doesn't exist in the process event model, the target process event as the abnormal process event, or determining, in response to that the normal combination feature consistent with the process combination feature of the target process event exists in the process event model and a feature value corresponding to the process parameter feature of the target process event exceeds a second indicator range, the target process event as the abnormal process event, wherein the second indicator range is determined based on the parameter feature indicator corresponding to the normal combination feature.

8. The attack detection method for the container according to claim 6 or 7, wherein the parameter feature indicator comprises a process parameter length.

9. The attack detection method for the container according to any one of claims 1 to 8, wherein the determining, based on the abnormal access request and the abnormal process event, the attack detection result (S103) comprises:
performing temporal correlation analysis on the abnormal access request and the abnormal process event to obtain a temporal correlation sequence;
determining, based on the temporal correlation sequence and a preset abnormal condition, a target abnormal sequence in the temporal correlation sequence; and
determining, based on a target abnormal access request and a target abnormal process event corresponding to the target abnormal sequence, the attack detection result, wherein the attack detection result comprises a mapping relationship between the target abnormal access request and the target abnormal process event.

10. The attack detection method for the container according to claim 9, wherein the performing the temporal correlation analysis on the abnormal access request and the abnormal process event to obtain the temporal correlation sequence comprises:
for each abnormal access request, determining a target time of the abnormal access request, taking a number of abnormal access requests within a first preset time period after the target time as a number of target abnormal requests corresponding to the target time, and taking a number of abnormal process events within a second preset time period after the target time as a number of target abnormal processes corresponding to the target time, wherein the second preset time period is greater than the first preset time period;
determining, according to numbers of target abnormal requests corresponding to all target times, an abnormal request sequence, and determining, according to numbers of target abnormal processes corresponding to all target times, an abnormal process sequence; and
determining subsequences in the abnormal request sequence and the abnormal process sequence that are positively correlated as the temporal correlation sequence.

11. The attack detection method for the container according to claim 9 or 10, wherein the determining, based on the temporal correlation sequence and a preset abnormal condition, the target abnormal sequence in the temporal correlation sequence comprises:
determining, in response to that an abnormal subsequence exists in the temporal correlation sequence, the abnormal subsequence as the target abnormal sequence in the temporal correlation sequence, wherein an abnormal access request corresponding to the abnormal subsequence comprises a process name of an abnormal process event corresponding to the abnormal subsequence, and the abnormal process event corresponding to the abnormal subsequence is successfully executed; and/or
determining, in response to that the number of subsequences in the temporal correlation sequence within a third preset time period is greater than a preset number threshold, the temporal correlation sequence as the target abnormal sequence, wherein the third preset time period is greater than the second preset time period.

12. An electronic device, comprising:
a storage apparatus, on which a computer program is stored;
a processing apparatus, configured to execute the computer program in the storage apparatus to implement the method according to any one of claims 1 to 11.

13. The electronic device according to claim 12, wherein the determining the abnormal access request in the network access request and the abnormal process event in the process execution event (S102) comprises:
determining, by an access request model, the abnormal access request in the network access request and determining, by a process event model, the abnormal process event in the process execution event;
wherein the access request model is obtained by modeling based on a normal access request for the service of the first container load, and the process event model is obtained by modeling based on a normal process event in the first container.

14. The electronic device according to claim 13, wherein the access request model is determined by:
acquiring a plurality of the normal access requests for the service of the first container load;
parsing, for each normal access request, the normal access request to obtain a normal request address and a normal request feature of the normal access request;
performing, according to the normal request addresses, cluster analysis on normal request features of the plurality of normal access requests to obtain a request feature indicator corresponding to each normal request address; and
determining the access request model based on all normal request addresses and the request feature indicators corresponding to the normal request addresses.

15. The electronic device according to claim 14, wherein the determining, by the access request model, the abnormal access request in the network access request based on the access request model comprises:
parsing the network access request to obtain a network request address and a network request feature of the network access request; and
for each target access request in the network access request, determining, in response to that a normal request address consistent with the network request address of the target access request doesn't exist in the access request model, the target access request as the abnormal access request, or determining, in response to that the normal request address consistent with the network request address of the target access request exists in the access request model and a feature value corresponding to at least one network request feature of the target access request exceeds a first indicator range, the target access request as the abnormal access request, wherein the first indicator range is determined based on the request feature indicator corresponding to the normal request address.
